# EUROPEAN PATENT APPLICATION

(11) **EP 3 067 842 A1**
(43) Date of publication of application: **14.09.2016**
(21) Application number: 13896613.0
(22) Date of filing: 04.11.2013
(51) Int. Cl.: G06Q 10/08

(54) **DEVICE FOR RECORDING DATA FOR MONITORING AND TRACKING THE DISPATCH AND TRANSPORTATION OF GOODS REQUIRING SPECIFIC VALUES TO BE MAINTAINED, AND METHOD FOR ACHIEVING SAID MONITORING AND TRACKING**

(71) Applicant: Sociedad Española Para el Internet de Las Cosas, S.L., 08800 Villanova l la Geltrú (Barcelona) (ES)
(72) Inventor: MIRALLES FERRER, Griselda, 08800 Vilanova I la Geltrú Barcelona (ES); LONGOBUCO GONZALEZ, Martin, 08800 Vilanova I la Geltrú Barcelona (ES)
(74) Representative: Espiell Volart, Eduardo Maria
(86) International application number: PCT/ES2013/000242
(87) International publication number: WO 2015/063345

(57) **Abstract**

The invention concerns a device for recording data for monitoring and tracking the dispatch and transportation of goods requiring specific values to be maintained, and method for achieving said monitoring and tracking, which incorporates an electronic board with microprocessor (3), GPS (4), clock (5), memory card (6), power-supply battery (7), LCD read screen (8) and connectors (9) for coupling probes (10) for sensing temperature, moisture level or other parameters, being provided with a wireless communication card (12) with a GSM/GPRS 3G system, with roaming, suitable for use of the Internet communications service (I) of the loT or "Internet of things" (T) offered by telephony operators for gaining access to a URL for storage of sensor data offered by said service.

## Description

### Object of the invention

The invention, as expressed in the title of this patent specification, refers to a data recording system for monitoring and tracking in the dispatch and transportation of goods requiring specific values to be maintained, and the method for achieving said monitoring and tracking, providing a number of innovative features, which will be described in detail below, representing a remarkable improvement compared to that which is already known, within its technical field, in the state of the art.

More particularly, the object of the invention is focused on an electronic data recording and geolocation system that is particularly designed for monitoring and tracking in the dispatch and transportation of certain goods that require, so as not to deteriorate, maintaining certain configurable values, especially the temperature although not limited to it, within a framework of a range of very specific limits, such as for example drugs, vaccines, food, dry ice, transplant organs, animals, biological samples, etc. The system has the peculiarity of being structurally configured to allow such monitoring and tracking, in addition to memory data storage, by online tracking in real time from any platform with access to the Internet and using any telecommunications operator that provides loT (stands for *Internet of Things,* ) service, allowing tracking to be set as accurately as desired without relying on any specific application of any specific server or data manager, also allowing to significantly reduce the economic cost of said service.

### Technical field of the invention

The technical field of the present invention is within the framework of the industrial sector dedicated to the manufacture of apparatus and electronic devices for recording configurable data, focusing on the range of those that incorporate geolocation and remote tracking.

### State of the art

As is known, a data recorder (*datalogger*) is an electronic device that records data over time or in relation to location by means of instruments and its own or externally connected sensors. Almost all are based on microcontrollers. Usually they are small, battery operated, portable, and equipped with a microprocessor, internal memory for data storage and sensors. Some data recorders are connected to a personal computer and use specific software to activate the data recorder to view and analyse the collected data, while others have a local interface device (keypad, LCD screen) and can be used as an independent device.

They are also usually equipped with a real time clock to add the date and time to the data collected and can be designed to have only one channel, for example only temperature, up to the formation of complex programmable systems with multiple inputs and recordings of calculated values and alarms based on the measured values. For example cold hours per day, dew point based on temperature and humidity. Temperature differences between two sensors, etc.

Most modern recorders function as dynamic web page servers that can be accessed remotely.

However, in most cases, such devices are used as a static element to measure and collect data at a fixed location.

The problem arises when the need to record the data has to be done in one or more mobile elements, as is the case with the control of goods sent by transport from one place to another and monitoring is necessary to maintain the adequate conditions for such transportation.

Thus, for example in the case of goods such as drugs, vaccines, food, dry ice, transplant organs, animals, biological samples, chemicals etc., which are often sent from one place to another, even thousands of kilometres in distance, it can become very important that the temperature, relative humidity or oxygen are kept within a certain range of valuesand do not exceed certain limits whilst being moved in the various means of transport. These can encompass means of transport from the local delivery van, to merchant ships, planes, trucks or trains and the goods being held in billing, customs and logistics warehouses under highly variable and not always predictable conditions of atmosphere and temperature.

It would be desirable, therefore, to have a data recording device that allows a monitoring as precise as necessary depending on the type of goods to be transported, regardless of distance, medium or means of transport, and without mattering either the number of dispatches to be monitored. This is another of the important problems to solve, since, although some such devices are known that are capable of allowing a geolocation tracking for the monitoring and recording of data, those hitherto known use a specially contracted server which, allows them access to the recorded data through a specific application, which, however, only allows viewing off-line during the recording period and, furthermore, has a very high cost.

This limitation also has the disadvantage of being limited to the capacity of said server and, if for example the volume of goods to be monitored is very high, as can be the case of companies that dispatch thousands of packets of dry ice simultaneously to multiple destinations and need to be able to monitor each and every one of them at any time, such a limitation would be a major handicap for its development.

The object of the present invention is, therefore, to develop an improved data recorder device for monitoring and tracking in the dispatch and transportation of goods that meets said expectations. It should be noted that, at least on the applicant's part, the existence is unknown of any other data recording device or invention of similar application that has similar technical, structural and constitutive features to those the applicant proposes herein, according to the claims.

### Summary of the invention

Thus, the data recording device for monitoring and tracking in the dispatch and transportation of goods requiring specific values to be maintained and the method for achieving said monitoring and tracking proposed herein are configured as a remarkable novelty within its technical field, since according to its use and in an exhaustive manner, the objectives previously identified as ideal are successfully achieved. The detailed features that make it possible and distinguish it from what is already known are conveniently collected in the final claims accompanying the present patent specification. Specifically, the system proposed by the invention, being of those which basically comprise a device with a microprocessor, internal memory for data storage, one or more sensors, LCD read screen (stands for *Liquid Crystal Display,)* clock and power-supply battery, and means for communicating with a computer, has the following characteristics:
The microprocessor is incorporated into a board which has GPS (stands for *Global Positioning System,*) with high gain antenna to collect information from up to 14 satellites and position the device, recording said information on an SD card (stands for *Secure Digital,* which is a flash memory card format) which is preferably the memory storage of the device.

It also has at least one temperature probe, being optional the incorporation of additional probes, for example for obtaining information on humidity, pressure, shock, etc.

With all the above, the device is capable of performing a data recording every twenty seconds for a whole year.

However, the main innovative feature that the proposed device presents is the incorporation of a type of SIM card (stands for Subscriber Identity Module), which, contracted to any telecommunications operator providing this service, allows connection to a communications system GSM/GPRS/3G/M2M (all standing for: *Global System for Mobile, General Packet Radio Service,* abbreviation for third generation; and *Machine to Machine,* which is a generic term that refers to the exchange of information or communication in data format between two remote machines). Said type of SIM card has the particularity that it collects the data it receives from the microprocessor and sends them directly to a communications service through Internet called loT or "Internet of Things", thanks to which, among other uses, a website or URL (stands for *Uniform Resource Locator*) can be accessed that stores data from sensors around the world.

The main advantage is that, at a very low price, usually a service fee that will be similar to contracting a data line, it allows the communication of data between the device and a website accessible from any device with Internet access.

Also, by a simple process of user identification, the website of the operator with whom the line has been contracted can be accessed to access the device's data or devices available to said user, allowing the monitoring and tracking in real time of any of the goods which have been assigned to the device, usually incorporated into the transportation container of said goods.

The main difference with other devices of this type that may be on the market is that it is not necessary to have any software or specific application installed by the user to have access to his/her data, which, as far as their abilities are concerned, will always be more limited, so it will have a much higher economic cost of both implementation and service maintenance.

The proposed device, therefore, thanks to said incorporation of said communication system only includes the development of hardware and firmware programming, which can be tailored to the needs of each case, while the software to access the data is free and the user or the manager/distributor company of the device or devices can always choose the operator that is most suitable. This with the great added advantage that the information of said data may also be accessed in multiple formats, for example, Excel, txt or kml format, preferably the latter, since with it the reproduction on the world map of the route that the goods have made in whose container the device of the invention has been incorporated can be directly read on the Google Earth platform, allowing the knowledge of the temperature or parameter that each sensor of the device monitors at each point along the route.

Another advantage of the incorporation of the SIM card described for communication with the loT system is that it has *"feedback"* (control mechanism of dynamic systems by which a certain proportion of the output signal is redirected to the input, allowing the regulation of its behaviour), which allows reprogramming the device remotely, even while it is being used in a dispatch.

With regard to the above, it is established that the data recorder device for monitoring and tracking in the dispatch and transportation of goods requiring specific values to be maintained and the method to achieve it described represent an innovation of structural and constitutive characteristics hitherto unknown for the purpose for which it is intended, reasons that linked to its practical usefulness, provide sufficient grounds for obtaining the privilege of exclusivity that is sought.

### Description of figures

In order to complement the description that is being carried out and with the purpose of facilitating the understanding of the characteristics of the invention, the present description is accompanied by a set of drawings wherein, by way of a non-limiting example, the following has been represented:
- Figure 1 shows an elevational schematic view of an exemplary embodiment of the electronic device of the invention, where the main elements it comprises can be seen.
- Figure 2 shows a diagram of the method followed in the operation of the electronic device to achieve the monitoring and tracking of the goods with which the device is associated, according to the invention.

### Preferred embodiment of the invention

In view of the mentioned figures and according to the adopted numbering, a preferred but non limiting exemplary embodiment can be seen, of the data recording system for the monitoring and tracking in the dispatch and transportation of goods requiring specific values to be maintained, object of the invention, comprising the parts and elements that are described in detail below.

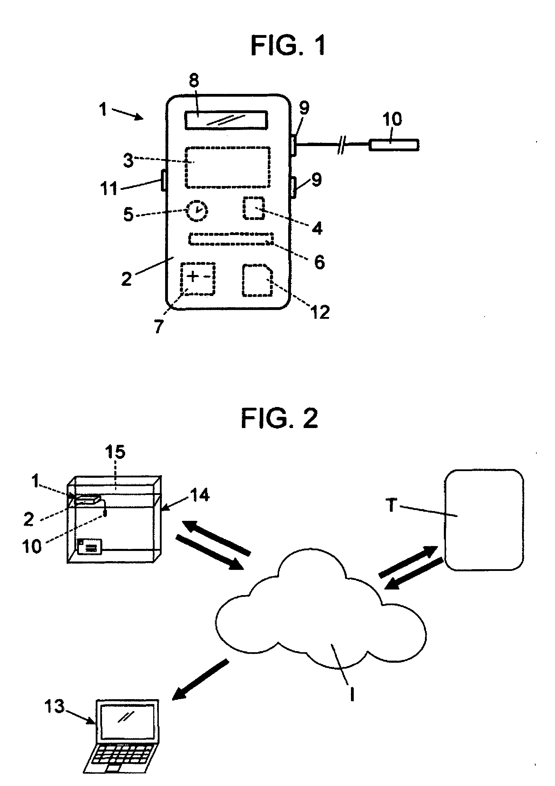

Thus, as shown in Figure 1, the system in question comprises a device (1) consisting of an electronic device that is configured, essentially, from a protective housing (2), which comprises, at least, one electronic board with microprocessor (3), GPS (4), clock (5) in order to determine the date and time, a memory card (6), power supply battery (7), LCD read screen (8) and one or more connectors (9) for coupling one or more probes (10) for sensing temperature, humidity and other parameters, and also optionally, a connection port (11) for programming of the microprocessor (3) through its connection to a computer or appropriate analogue device, conveniently connected.

Moreover, and in a characterising way, the device (1) includes the incorporation of a wireless communication card (12) with GSM/GPRS 3G system, with *roaming* (or roaming capability) consisting of a SIM type card of any telephony operator suitable for using the Internet communication service (I) of the loT or 'Internet of Things' (T) offered by said operators and accessing from any computer (13) or electronic device with connection to Internet (I) to a URL for storage of sensor data provided by said service, to which said card sends the data that it collects from the microprocessor (3). Since the device (1) proposed is specially devised for the monitoring and tracking in the dispatch and transportation of goods that normally require, so as not to deteriorate, maintaining certain values, especially the temperature, humidity or others, within a framework of a range of very specific limits, the electronic device is arranged, preferably incorporated inside the container (14) in which the dispatch and transportation is going to be made of the goods in question and which can be a container specifically designed for such purpose, wherein a specific compartment (15) is included for the adequately protected and/or insulated accommodation of the housing (2) providing the passage of the sensors to the space occupied by the goods, or even a conventional container inside which the device is incorporated next to the product, depending on the needs and particularities of the goods in each case.

Furthermore, in a preferred embodiment of the invention, the device (1) has at least a capacity of temperature measurement by means of a sensor DS18B20 (10) (or similar) and geolocation using GPS to update the given URL, via GSM/GPRS (e.g. through xively.com, clickslide.com, BlueVia platforms, etc.) within the loT (*Internet of the Things*) framework.

The housing (2) is a compact box that has small dimensions of 120 x 100 x 45, and includes a mini SD card as a memory card (6) for data storage.

The power supply is provided preferably by a Lithium battery (7) with integrated USB charger and included power supply unit.

The main advantages are:
- in terms of the software, it is a free platform for the user. It allows its use in Web and App environment on mobile under any operating system;
- in terms of system requirements, it has none;
- in terms of data visualisation, it displays on-line alerts and values during the period of recording;
- in terms of connectivity, data are recorded simultaneously in the cloud (IoT) using M2M/3G connection with *roaming* between different telephony operators and worldwide coverage. The card can be read directly from an SD *slot* or compatible device. The data are recorded in the loT, regardless of the operating system used. They are downloadable and readable for any platform;
- in terms of configuration, it does not require any application. It is configured using the menu options that appear on the LCD screen;
- and, in terms of limit values, levels can be configured for each of the sensors.

The device alerts when these levels are exceeded. The screen displays which sensor and to which extent it has exceeded the pre-set level, as well as at what moment of the route said circumstance occurred.

Having sufficiently described the nature of the present invention, as well as the way to put it into practice, it is not considered necessary to enlarge its explanation so that anyone skilled in the art may understand its scope and the advantages derived from it, on the understanding that, in its essence, it may be implemented in other embodiments that differ in detail from that shown by way of example, and which will also be covered by the claimed protection provided that its fundamental principle is not changed or modified.

## Claims

1. Data Logger Device for Control and monitoring in the Shipping and Transport of products that require maintaining specific values, of the type that It incorporates an Electronic plate with a microprocessor (3), a gps (4), a clock (5), a Memory Card (6), a Battery Power (7), a LCD screen (8) for reading and connectors (9) to connect SENSORS (10) of temperature, humidity and other parameters **characterized In that** It incorporates a Card Wireless Communication System (12) with GSM / GPRS 3G roaming, suitable to use the service of Internet Communications (i) loT or "Internet of Things" (T) that offer Telephony operators.

2. Data Logger Device for Control and monitoring in the Shipping and Transport of products that require maintaining specific values, according to claim 1, **characterized in that** it comprises a Compact and small protection housing (2), inside which are all its components.

3. Data Logger Device for Control and monitoring In the Shipping and Transport of products that require maintaining specific values, according to claim 1 or 2, **characterized in that** It incorporates a temperature sensor DS18B20 type (10).

4. Data Logger Device for Control and monitoring in the Shipping and Transport of products that require maintaining specific values, according to any of claims 1 - 3, wherein the Memory Card (6) Is a Mini SD Card.

5. Data Logger Device for Control and monitoring in the Shipping and Transport of products that require maintaining specific values , according to any of claims 1 - 4 wherein the battery (7) is a Lithium Battery integrated with a USB Charger and Power Supply included.

6. Procedure to carry out the Control and monitoring in the Shipping and Transport of products that require maintaining specific values, using a Data Logger Device as defined in any of claims 1 - 5, **characterized In that** It includes the use of Internet Communications Service (i) lot or "Internet of Things" (T) that is provided by telephone operators (13) to access, from a computer or electronic device with internet connection (i), to a URL sensor data storage that provides this service through a Card Wireless Communication System (12) with GSM / GPS 3G roaming, incorporated In the device (1) which sends the Data picked by the Microprocessor (3) to this URL Storage.

7. Procedure to carry out the Control and monitoring in the Shipping and Transport of products that require specific values to maintain, according to claim 4, **characterized in that** it includes the Incorporation of the device (1) within a container (14) for shipment and Transportation of the product designed specifically for the purpose.

8. Procedure to carry out the Control and monitoring in the Shipping and Transport of products that require specific values to maintain, recording to claim 7, wherein the container (4) provides a specific comportment (15) for the protected and / or isolated accommodation of the housing (2) and a way for Sensors to the Space occupied by The product.

9. Procedure to carry out the Control and monitoring in the Shipping and Transport of products that requires maintaining values according to claim 6, **characterised in that** it includes the incorporation of the device (1) located next to the product inside a conventional container for Shipping and Transport.

## Amended claims

### Amended claims under Art. 19.1 PCT

**1.** A data recording system for monitoring and tracking in the dispatch and transportation of goods requiring specific values to be maintained; comprising a device (1) that incorporates: a compact protective housing (2) of reduced dimensions, inside which are: an electronic board with microprocessor (3), GPS (4), clock (5), memory card (6), power-supply battery (7), LCD read screen (8), and connectors (9) for coupling probes (10) for sensing temperature, moisture level or other parameters, **characterised in that**:
the device (1) is associated with the goods that are to be monitored and tracked and incorporates: - a wireless communication card (12) with a GSM/GPRS 3G system, with *roaming,* suitable for use of the Internet communications service (I) of the loT or "Intemet of things" (T) offered by telephony operators;
and **in that** the system further comprises:
- a URL for storage of sensor data (10) sent by the wireless communication card (12), and
- a computer (13) or electronic device with an Internet connection (I) to access the URL for the storage of data from the sensors (10).

**2.** The data recording system for monitoring and tracking in the dispatch and transportation of goods requiring specific values to be maintained, according to Claim 1, **characterised in that** it comprises a container (14) for the dispatch and transportation of goods to be monitored, and inside such container (14) the device (1) is arranged next to the goods to be monitored; and said container (14) comprises a specific compartment (15) for the protected and/or insulated accommodation of the housing (2) and passage for the sensors (10) to the space occupied by the goods.

**3.** The system according to Claim 1 or 2, **characterised in that** it incorporates a DS18B20 type temperature sensor (10).

**4.** The data recording system for monitoring and tracking in the dispatch and transportation of goods requiring specific values to be maintained, according to any of Claims 1-3 **characterised in that** the memory card (6) is a mini SD card.

**5.** The data recording system for monitoring and tracking in the dispatch and transportation of goods requiring specific values to be maintained, according to any of Claims 1-4 **characterised in that** the battery is a Lithium battery (7) with integrated USB charger and included power supply unit.

**6.** A method for achieving the monitoring and tracking in the dispatch and transportation of goods requiring specific values to be maintained by a data recording system as described in any of Claims 1-5, **characterised in that** it includes:
- the incorporation of the device (1) arranged next to the goods that are to be monitored and tracked.
- the use of the communications service via the Internet (I) of loT or "Internet of things" (T), offered by telephony operators to access, from a computer (13) or electronic device with an Internet connection (I), a URL for storage of sensor data providing this service through a wireless communication card (12) with GSM/GPRS3G system, with *roaming,* incorporated in the device (1), which sends the data collected by the microprocessor (3) to said storage URL.

**7.** The method for achieving the monitoring and tracking in the dispatch and transportation of goods requiring specific values to be maintained, according to Claim 6, **characterised in that** it includes the incorporation of the device (1) arranged within a container (14) for dispatch and transportation of goods designed specifically for that purpose.

**8.** The method for achieving the monitoring and tracking in the dispatch and transportation of goods requiring specific values to be maintained, according to Claim 7, **characterised in that** in the container (14) a specific compartment (15) is included for the protected and/or insulated accommodation of the housing (2) and passage for the sensors (10) to the space occupied by the goods.

**9.** The method for achieving the monitoring and tracking in the dispatch and transportation of goods requiring specific values to be maintained, according to Claim 6, **characterised in that** it includes the incorporation of the device (1) arranged next to the goods within a conventional container for dispatch and transportation of the same.
